# EUROPÄISCHE PATENTSCHRIFT

(11) **EP 2 008 818 B1**
(45) Veröffentlichungstag und Bekanntmachung des Hinweises auf die Patenterteilung: **18.09.2013**
(21) Anmeldenummer: 08011365.7
(22) Anmeldetag: 23.06.2008
(51) Int. Cl.: B41F 33/00, G01J 3/46

(54) **Verbesserter Druckkontrollstreifen zur Farbmessung auf Bedruckstoffen**
Improved print control strips for measuring colour on printed material
Bandes de contrôle de pression améliorées destinées à la mesure de la couleur sur une matière d'impression

(30) Priorität: 25.06.2007 DE 102007029211
(43) Veröffentlichungstag der Anmeldung: 31.12.2008
(60) Teilanmeldung: 13156963.4
(73) Patentinhaber: Heidelberger Druckmaschinen AG, 69115 Heidelberg (DE)
(72) Erfinder: Billmaier, Stefan, 69190 Walldorf (DE); Wenzel, Bernd, 69234 Dielheim (DE)

(56) Entgegenhaltungen:
- EP-A1- 0 518 559
- EP-B1- 0 196 431
- WO-A1-2005/108084
- DE-A1- 3 909 410
- US-A1- 2005 134 872

## Beschreibung

Die vorliegende Erfindung betrifft einen Druckkontrollstreifen zur Aufbringung auf Bedruckstoffe während eines mehrfarbigen Druckprozesses mit mehreren Messfeldern, welche einer Farbzone auf dem Bedruckstoff zugeordnet sind.

Die Qualität eines Druckprozesses wird daran gemessen, inwieweit die produzierten Bedruckstoffe mit dem Original einer Vorlage übereinstimmen. Ein wesentliches Qualitätsmerkmal ist dabei die möglichst farblich exakte Übereinstimmung von Bedruckstoff und Vorlage. Die Qualität der produzierten Bedruckstoffe kann zum einen durch Begutachtung des Druckers überprüft werden, wobei diese Begutachtung subjektiv und von der Person abhängig ist. Zur objektiven Qualitätskontrolle sind stattdessen schon seit geraumer Zeit Farbmessgeräte entwickelt worden, welche die produzierten Bedruckstoffe farbmetrisch oder densitometrisch erfassen. Meist wird dabei jedoch nicht das gesamte Druckbild vermessen, weil dies eine Vielzahl von Messpunkten und damit einen sehr langen Farbmessprozess bedeuten würde. Stattdessen werden meist sogenannte Druckkontrollstreifen von den Farbmessgeräten erfasst, welche sich außerhalb des Druckbildes im seitlichen Bereich des Bedruckstoffes befinden. Diese Druclekontrollstreifen können auch in der Druckmaschine durch dort eingebaute Farbmessgeräte erfasst werden, da auf den Druckkontrollstreifen nur eine begrenzte Anzahl von Farbmessungen durchgeführt werden muss, so dass auch bei hohen Druckgeschwindigkeiten, wie sie bei aktuellen Offsetdruckmaschinen im Bereich von 18.000 Bogen pro Stunde üblich sind, die Messwerte genau erfasst werden können. Ein solcher Druckkontrollstreifen ist aus der DE 3643721 A1 bekannt. Ein solcher Druckkontrollstreifen zur Kontrolle und Steuerung des Druckprozesses weist mehrere aneinander gereihte Farbfelder unterschiedlicher Farbe und Struktur auf, die den Farbzonen des Farbkastens einer Offsetdruckmaschine entsprechend aufgeteilt sind. Dabei sind die beim Druckvorgang verwendeten Druckfarben im Druckkontrollstreifen meist als Vollton und als Halbtöne enthalten. In der DE 3643721 A1 weist der Druckkontrollstreifen abwechselnd einfarbige Volltonfelder für jede Druckfarbe und außerdem einfarbige Rasterfelder für jede Druckfarbe auf. Der Druckkontrollstreifen in DE 3643721 A1 weist jeweils auf der Grenze zwischen zwei Farbzonen ein Graumessfeld auf. Damit ist jedoch keine optimale Regelung der Farbe nach den wenigen Graumessfeldern möglich.

Das Dokument EP 0 518 559 A1 zeigt ein Verfahren und ein Gerät zur Herstellung eines Druckkontrollstreifens. Dieser Druckkontrollstreifen dient dazu, die Qualität von Druckerzeugnissen zu überprüfen. Insbesondere wird dabei die Qualität der Farbwiedergabe beurteilt. Ein derartiger Druckkontrollsteifen besteht aus mehreren Farbmessfeldern in einer Reihe. Die Farbmessfelder umfassen einzelne Volltonfelder, sowie Farbmessfelder aus zwei, drei oder vier übereinander gedruckten Farben. Weiterhin sind ein Graumessfeld und ein Weißmessfeld enthalten. Der Benutzer hat die Möglichkeit, sich seinen eigenen Farbmessstreifen nach seinen eigenen Wünschen zusammenzustellen.

Die Patentanmeldung US 2005/0134872 A1 offenbart ein System und ein Verfahren zur Steuerung der Farbgebung in Druckmaschinen. Dabei kommen Farbmessstreifen in unterschiedlichen Ausführungen zum Einsatz. Die Farbmessstreifen werden dabei auf jeder Seite einer Zeitung aufgebracht, welche mit einer Rollenrotationsdruckmaschine hergestellt wird. Ein typischer Farbmessstreifen enthält die drei Grundfarben Cyan, Magenta, Yellow übereinander gedruckt als Graumessfeld sowie ein Schwarzmessfeld.

Aus der Offenlegungsschrift DE 39 09 410 A1 geht ein Verfahren für optische Reflexionsmessungen sowie ein Densitometer und ein Druckkontrollstreifen zu seiner Durchführung hervor. Es wird ein Druckkontrollstreifen beschrieben, welcher eine Messfeldsequenz aus 16 Kontrollfeldem aufweist. Die Messfeldsequenz weist mehrere Farbfelder für Cyan, Magenta, Gelb und Schwarz auf sowie zwei Grau Balance Felder. Des Weiteren sind in den Messfeldsequenzen abwechselnd auftauchende Sonderkontrollfelder vorgesehen.

Aus der europäischen Patentschrift EP 0196 431 B1 ist ein Verfahren und eine Regelvorrichtung zur Steuerung von Mehrfarbenoffsetdruckmaschinen bekannt Dieses Verfahren und die Vorrichtung regeln die Farbgebung in einer Druckmaschine auf Basis von Farbmessfeldern. Um möglichst wenige Einzelfarbenfarbmessfelder in einem Farbmessstreifen zu benötigen, wird vorgeschlagen, mehrere Einzelfarbenfelder zu Kombinationsmessfeldern, so genannten braunen oder grauen Messfeldern zusammenzufassen. Insbesondere sollen Einzelfarbenfarbmessfelder mit den Grundfarben Magenta, Cyan und Gelb zu einem braunen oder grauen Kombinationsmessfeld zusammengefasst werden. Dadurch wird nur noch ein Drittel desjenigen Raums benötigt, der beim Nebeneinanderdruck von drei Einzelfarbenmessfeldern benötigt würde. Weiterhin wird vorgeschlagen, in jeder Farbzone je zwei braune oder graue Kombinationsmessfelder, die als Raster- oder Vollfelder ausgebildet sein können, vorzusehen.

Es ist Aufgabe der vorliegenden Erfindung, einen Druckkontrollstreifen zu schaffen, welcher eine bessere Farbregelung auf Basis von Graumessfeldern ermöglicht.

Die vorliegende Aufgabe wird erfindungsgemäß durch Anspruch 1 gelöst. Vorteilhafte Ausgestaltungen der Erfindung sind den Unteransprüchen und den Zeichnungen zu entnehmen. Gemäß der vorliegenden Erfindung werden in der Druckmaschine auf den Bedruckstoffen Druckkontrollstreifen aufgedruckt, welche mehrere Messfelder aufweisen, die einer Farbzone auf dem Bedruckstoff zugeordnet sind. Um die Regelung nach Graumessfeldern zu verbessern, umfassen die einer Farbzone zugeordneten Messfelder wenigstens zwei Graumessfelder. Damit ist es möglich, in jeder Farbzone mehrere Graumesswerte zu erhalten, wobei sich die Graumessfelder jeweils aus den sogenannten Buntfarben Cyan, Magenta und Gelb zusammensetzen. Dadurch, dass mehrere Graumessfelder pro Farbzone vorhanden sind, können in jeder Farbzone mehrere Grautöne erfasst werden. Die von einem Farbmessgerät densitometrisch oder farbmetrisch erfassten Graumesswerte können dann dem Steuerungsrechner der Druckmaschine zugeführt werden, welcher die erfassten Graumesswerte mit Farbmesswerten der Druckvorlage vergleicht und bei unzulässigen Abweichungen Stellgrößen zur Steuerung und Regelung der Farbdosiereinrichtung in den Druckwerken der Druckmaschine berechnet. Bei zonalen Farbdosiervorrichtungen in den Druckwerken ist es mittels der vorliegenden Erfindung möglich, für jede Farbzone mehrere Graumesswerte zur Regelung zur Verfügung zu haben. Dadurch wird die Farbregelung in den Farbzonen präziser. Neben den Graumessfeldern kann der Druckkontrollstreifen die üblichen Farbmessfelder wie die Volltöne Cyan, Magenta und Gelb sowie Schwarz und etwaige Sonderfarben aufweisen.

Des Weiteren können die einzelnen Farben auch als Rastertonfelder zwischen null und 100 Prozent vorliegen.

In einer besonders vorteilhaften Ausgestaltung der Erfindung ist vorgesehen, dass die einer Farbzone zugeordneten Messfelder drei Graumessfelder umfassen. Je mehr Graumessfelder vorhanden sind, desto exakter kann die Farbregelung für jede Farbzone vorgenommen werden. Insbesondere durch das Vorsehen von drei Graumessfeldern im Viertelton, Halbton und Dreiviertelton für die drei Grunddruckfarben Cyan, Magenta und Gelb ist eine besonders exakte Farbmessung und -regelung möglich. Damit können auch schwierige Druckaufträge in Bezug auf Farbe exakt ausgeregelt werden.

In einer Ausgestaltung der Erfindung ist vorgesehen, dass die Messfelder in wenigstens zwei Reihen parallel zueinander angeordnet sind. Die bisher bekannten Druckkontrollstreifen bestehen jeweils aus einer Reihe von Messfeldern, die sich entsprechend der Anzahl der Farbzonen wiederholen. Durch die doppelreihige oder mehrreihige Anordnung von Farbmessfeldern wird eine Redundanz von Farbmessfeldern in jeder Farbzone erreicht. Auf diese Art und Weise erhält der Drucker mehr Information für die Farbmessung und -regelung in jeder Farbzone. Durch die redundante Information in jeder Farbzone ist es auch möglich, etwaige Fehlmessungen bedingt durch Druckprobleme wie Schablonieren, Butzen und Puderaufbau während des Druckprozesses in der Druckmaschine zu erkennen. Auf diese Art und Weise werden die Farbmessung und damit auch die Farbregelung zuverlässiger gestaltet.

In einer weiteren Ausgestaltung der Erfindung ist vorgesehen, dass jedes Messfeld aus der ersten Reihe auch wenigstens einmal in jeder der anderen Reihen vorhanden ist. Bei dieser Auslegung werden in jeder Farbzone zwei Messfelder gleicher Art vom Farbmessgerät erfasst, so dass eine doppelte Farbmessung für jedes Messfeld in jeder Farbzone möglich ist.

Um die Aussagekraft der Messwerte zu verbessern, ist es weiterhin von Vorteil, dass die Messfelder in den Reihen jeweils in der Reihenfolge unterschiedlich angeordnet sind. Auf diese Art und Weise wird vermieden, dass lokale Druckprobleme wie Butzen oder lokal eng begrenzter Puderaufbau auf einem Messfeld gleich sämtliche gleichartigen Messfelder in einer Farbzone betreffen. Durch die unterschiedliche Reihenfolge sind gleichartige Messfelder in einer Farbzone räumlich voneinander getrennt angeordnet, so dass durch lokal begrenzte Druckprobleme nicht gleich sämtliche gleichartigen Messfelder als unbrauchbar gewertet werden müssen. Mittels der Messwerte der benachbarten Farbzonen kann dann der Steuerungsrechner der Druckmaschine erkennen, welches der gleichartigen Messfelder in der betroffenen Farbzone mit hoher Wahrscheinlichkeit das korrekte Messfeld ist. Dabei ist es ausreichend, dass gleichartige Messfelder in jeder Farbzone nur einmal vorhanden sind. Durch den zwei- oder mehrreihigen Aufbau wird die für die zuverlässige Farbmessung erforderliche Redundanz gewahrt, ohne dass der mehrreihige Druckkontrollstreifen zu viele Messfelder pro Farbzone aufweisen muss. Da die Breite der Farbzone fest vorgegeben ist, führt eine unnötig große Anzahl von Messfelder pro Farbzone zu entsprechend kleinen Messfeldem, die dann schwerer exakt farblich zu vermessen sind.

Des Weiteren ist vorgesehen, dass vor der Erfassung der Graumessfelder durch ein Farbmessgerät über eine Eingabevorrichtung die Auswertung der Graumessfelder durch den Rechner beeinflussbar ist. Wenn mehrere Graumessfelder pro Farbzone vorhanden sind, so kann deren Auswertung an die besonderen Gegebenheiten eines Druckauftrags angepasst werden. So kann der Drucker in Kenntnis der Besonderheiten des Druckauftrags über eine Bedienoberfläche und Eingabegeräte wie Tastatur oder Maus sowie Touch Screen am Steuerungsrechner der Druckmaschine Graumessfelder auftragsspezifisch auswählen. So kann er zum Beispiel gezielt eine Farbregelung nur anhand des Vierteltons oder anhand der Halb- und Dreivierteltöne der Graumessfelder auswählen. Sind in einem Druckbild im Graubereich fast ausschließlich Vierteltöne vertreten, so erhält man ein bestmögliches Regelergebnis bei der Farbdosierung, wenn die Nachführung der einzelnen Farbzonen auf Basis der Graumesswerte des Vierteltongraumessfeldes durchgeführt wird. Die Regelempfehlungen für Halb- und Dreivierteltongraumessfelder sollten dann ausgeblendet werden. Damit würde die Regelqualität gegenüber einer Mittelwertfarbregelung unter Erfassung aller Graumessfelder mit gleicher Gewichtung deutlich verbessert werden. Standardmäßig kann jedoch die Farbregelung durch den Rechner so ausgestaltet sein, dass die Graumesswerte als Mittelwert in die Regelung der farbdosierenden Druckwerke einfließen. Nur auf ausdrücklichen Wunsch des Druckers und seiner Eingaben am Steuerungsrechner über ein entsprechendes Eingabemenü wird dann die auftragsspezifische Farbregelung auf Basis der gewählten Graumessfelder durchgeführt. Auf diese Art und Weise erhält der Drucker mehr Möglichkeiten, die Farbreglung an die besonderen Gegebenheiten eines Druckauftrags anzupassen, ohne auf die jederzeit verfügbare Standardregefung durch Mittelung erfassten Graumesswerte zu verzichten.

Die vorliegende Erfindung wird nachfolgend anhand mehrerer Figuren näher beschrieben und erläutert. Es zeigen:
Figur 1: einen geschlossenen Farbregelkreis, bestehend aus Farbmessgerät, Steuerungsrechner und Farbdosiereinrichtung in der Druckmaschine,

Figur 2: einen doppelreihigen Druckkontrollstreifen mit mehreren Graumessfeldern in einer Farbzone.

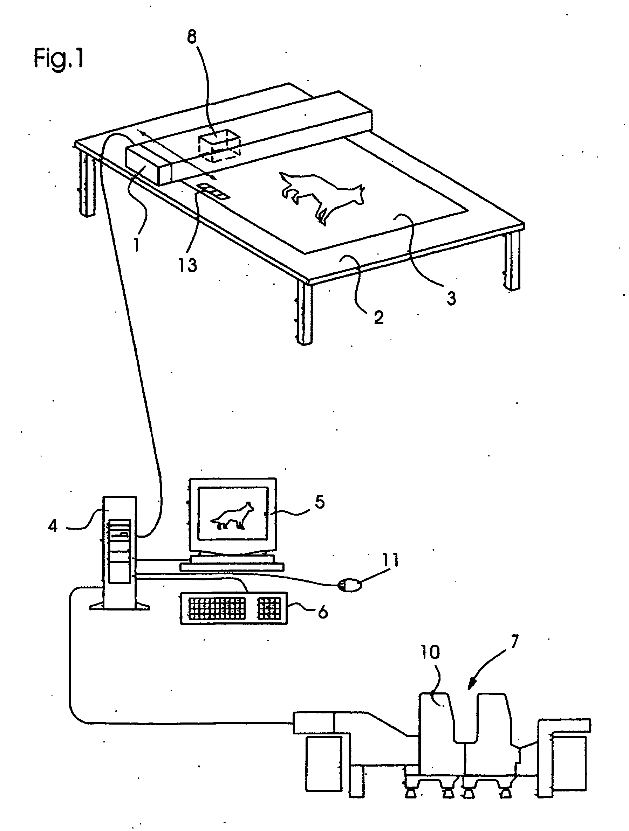

Der in Figur 1 gezeigte Farbregelkreis umfasst ein Farbmessgerät 1, einen Rechner 4 und die Farbdosiereinrichtung in den Druckwerken 10 einer Druckmaschine 7. Die genannten Geräte 1, 4, 7 sind über elektronische Kommunikationsverbindungen miteinander vernetzt. Das Farbmessgerät 1 ist in Figur 1 als separates Farbmessgerät ausgeführt, welches einen Messtisch 2 zur Aufnahme von produzierten Bedruckstoffen 3 aufweist. Statt dieses separaten Farbmessgeräts 1 kann auch ein in der Druckmaschine 7 integriertes sogenanntes Inline-Farbmessgerät verwendet werden, welches die Bedruckstoffe 3 in der Druckmaschine 7 vorzugsweise ausgangs des letzten Druckwerks 10 erfasst. Das separate Farbmessgerät 1 in Figur 1 verfügt über einen in Längsrichtung des Bedruckstoffs 3 verfahrbaren Messbalken und einen in Querrichtung des Bedruckstoffs 3 verfahrbaren Farbmesskopf 8, mit dem jeder beliebige Ort des Bedruckstoffs 3 farblich erfasst werden kann. Es ist zu erkennen, dass auf dem Bedruckstoff 3 neben dem Druckbild auch ein Druckkontrollstreifen 13 vorhanden ist. Dieser Druckkontrollstreifen 13 befindet sich im seitlichen Bereich des Bedruckstoffs 3. Um den Messvorgang zu verkürzen, reicht es aus, die Messfelder des Druckkontrollstreifens 13 durch das Farbmessgerät 1 zu erfassen. Die vom Farbmessgerät 1 erfassten Messwerte werden dann dem Rechner 4 zugeleitet, welcher als separater Rechner oder als Bestandteil des Steuerungsrechners der Druckmaschine 7 ausgeführt sein kann. Im Rechner 4 werden die erfassten Farbmesswerte mit den vorgegebenen Messwerten der Druckvorlage verglichen. Dazu kann die Druckvorlage in digitalisierter Form im Rechner 4 abgespeichert sein, oder der Rechner 4 erhält die Möglichkeit, auf entsprechende Daten in der Druckvorstufe zuzugreifen. Falls der Rechner 4 zwischen den Daten der Vorlage und den Messwerten außerhalb der Toleranz liegende Abweichungen feststellt, so werden die erfassten Abweichungen in Stellwerte für die Farbdosiereinrichtung in den Druckwerken 10 der Offsetdruckmaschine 7 umgerechnet. Die so berechneten Stellwerte werden dann an die Druckmaschine 7 übertragen und dort in entsprechende Änderungen zum Beispiel der Farbzonenöffnung bei zonalen Farbwerken in den Druckwerken 10 umgesetzt. Auf diese Art und Weise wird der Regelkreis zwischen Farbmessgerät 1 und Druckmaschine 7 geschlossen. Zur Anzeige und Bedienung verfügt der Rechner 4 über einen Bildschirm 5 und Eingabegeräte wie eine Maus 11 und eine Tastatur 6, mit denen der Drucker den Regelkreis der Farbdosierung beeinflussen kann. So kann der Drucker am Bildschirm 5 über die Maus 11 oder die Tastatur 6 die Art und Weise der Auswertung des Druckkontrollstreifens 13 durch den Rechner 4 bestimmen. Der Drucker kann zum Beispiel entscheiden, ob sämtliche Messfelder des Druckkontrollstreifens ausgewertet werden sollen oder ob nur bestimmte, für den vorliegenden Druckauftrag relevante Messfelder berücksichtigt werden sollen.

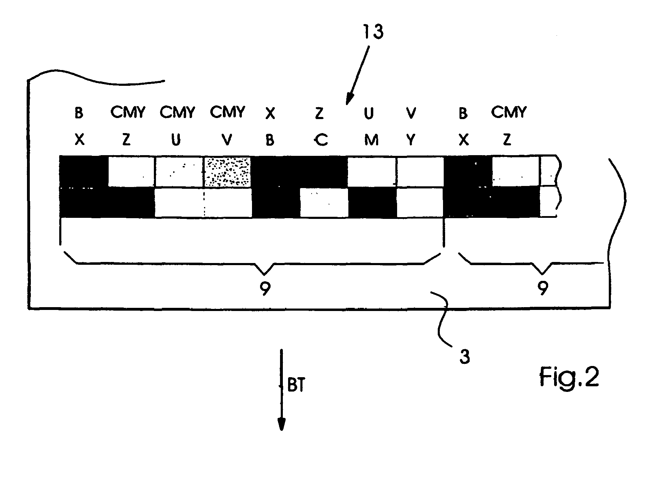

Der auf dem Bedruckstoff 3 vorhandene Druckkontrollstreifen 13 ist in der Figur 2 vergrößert dargestellt. Hierbei ist jeweils ein Ausschnitt des seitlichen Bereichs des Bedruckstoffs 3 dargestellt. Der Druckkontrollstreifen 13 ist in der Figur 2 jeweils für eine Farbzone 9 abgebildet. Diese Farbzone 9 wiederholt sich quer zur Transportrichtung des Bedruckstoffs BT über die gesamte Breite des Bedruckstoffs 3 hinweg. Im Bogenformat 102 sind üblicherweise 32 der Farbzonen 9 in einer Reihe aneinandergereiht vorhanden. Zwischen den einzelnen Farbzonen 9 kann der Druckkontrollstreifen 13 Lücken aufweisen oder zusätzliche Messfelder zum Beispiel für die Registerregelung oder Passerregelung. Insofern ist der Druckkontrollstreifen 13 auch nicht ausschließlich auf die Farbmessung begrenzt, sondern kann auch für andere Regelkreise genutzt werden. Der Druckkontrollstreifen 13 in Figur 2 weist in jeder Farbzone 9 mehrere Graumessfelder CMY auf. Diese Graumessfelder CMY sind in unterschiedlichen Tönen ausgeführt, so sind die Graumessfelder CMY in Figur 2 in jeder Farbzone 9 als Viertelton, Halbton und Dreiviertelton ausgeführt. Die Graumessfelder CMY sind jeweils nur in der oberen Reihe vorhanden, welche auch die Farbe Schwarz B sowie die Sonderfarben X, Z, U, V umfasst. In der unteren Reihe sind ebenfalls die Sonderfarben X, Z, U, V und die Farbe Schwarz B angeordnet sowie anstelle der Graumessfelder CMY die Buntfarben Cyan C, Magenta M und Gelb Y. Alle Messfelder können vom Farbmessgerät 1 erfasst und dann dem Rechner 4 zur Farbregelung zugeleitet werden. Auf Basis der so erfassten Farbmesswerte werden dann die Farbdosiereinrichtungen in den Druckwerken 10 der Offsetdruckmaschine 7 entsprechend geregelt.

### Bezugszeichenliste

- 1: Farbmessgerät
- 2: Messtisch
- 3: Bedruckstoff
- 4: Rechner
- 5: Bildschirm
- 6: Tastatur
- 7: Druckmaschine
- 8: Farbmesskopf
- 9: Farbzone
- 10: Druckwerk
- 11: Maus
- 13: Druckkontrollstreifen
- BT: Bedruckstofftransportrichtung
- B: Schwarz
- CMY: Graumessfeld
- C: Cyan
- M: Magenta
- Y: Gelb
- U: Sonderfarbe
- X: Sonderfarbe
- V: Sonderfarbe
- Z: Sonderfarbe

## Patentansprüche

1. Druckkontrollstreifen (13) zur Aufbringung auf Bedruckstoffe (3) während eines mehrfarbigen Druckprozesses mit mehreren Messfeldern (C, M, Y, B, X, U, V, Z, CMY), welche einer Farbzone auf dem Bedruckstoff (3) zugeordnet sind, wobei die einer Farbzone (9) zugeordneten Messfelder wenigstens zwei Graumessfelder (CMY) umfassen,
**dadurch gekennzeichnet,**
**dass** die Messfelder (C, M, Y, B, X, U, V, Z, CMY) in wenigstens zwei Reihen parallel zueinander angeordnet sind und dass jedes Messfeld aus der ersten Reihe auch wenigstens einmal in jeder der anderen Reihen vorhanden ist.

2. Druckkontrollstreifen (13) nach Anspruch 1,
**dadurch gekennzeichnet,**
**dass** die einer Farbzone (9) zugeordneten Messfelder drei Graumessfelder (CMY) umfassen.

3. Druckkontrollstreifen (13) nach Anspruch 2,
**dadurch gekennzeichnet,**
**dass** die Graumessfelder (CMY) einen Viertelton, einen Halbton und einen Dreiviertelton bestehend aus den drei Grunddruckfarben Cyan (C), Magenta (M) und Gelb (Y) zeigen.

4. Druckkontrollstreifen (13) nach einem der vorhergehenden Ansprüche,
**dadurch gekennzeichnet,**
**dass** der Druckkontrollstreifen (13) ein oder mehrere Messfelder mit Sonderfarben (U, X, V, Z) aufweist.

5. Druckkontrollstreifen (13) nach einem der vorhergehenden Ansprüche,
**dadurch gekennzeichnet,**
**dass** die Messfelder (C, M, Y, B, X, U, V, Z, CMY) in den Reihen jeweils in der Reihenfolge unterschiedlich angeordnet sind.

6. Druckkontrollstreifen nach einem der vorhergehenden Ansprüche,
**dadurch gekennzeichnet,**
**dass** die Messfelder (C, M, Y, B, X, U, V, Z, CMY) in den Reihen jeweils nur einmal vorhanden sind.

## Claims

1. Print control strip (13) to be applied to printing substrates (3) during a multi-colour printing process, having multiple measuring fields (C, M, Y, B, X, U, V, Z, CMY) associated with an ink zone on the printing substrate, wherein the measuring fields associated with an ink zone (9) comprise at least two grey measuring fields (CMY),
**characterized in**
**that** the measuring fields (C, M, Y, B, X, U, V, Z, CMY) are arranged in at least two rows and parallel to each other and that each measuring field from the first row is present at least once in each of the other rows.

2. Print control strip (13) according to Claim 1,
**characterized in**
**that** the measuring fields associated with an ink zone (9) comprise three grey measuring fields (CMY).

3. Print control strip (13) according to Claim 2,
**characterized in**
**that** the grey measuring fields (CMY) exhibit a quartertone, a halftone and a three-quarter tone consisting of the three basic printing colours cyan (C), magenta (M) and yellow (Y).

4. Print control strip (13) according to one of the preceding claims,
**characterized in**
**that** the print control strip (13) includes one or more measuring fields with special colours (U, X, V, Z).

5. Print control strip (13) according to one of the preceding claims,
**characterized in**
**that** the measuring fields (C, M, Y, B, X, U, V, Z, CMY) are arranged in different order in the respective rows.

6. Print control strip according to one of the preceding claims,
**characterized in**
**that** the measuring fields (C, M, Y, B, X, U, V, Z, CMY) are present only once in each row.

## Revendications

1. Bande de contrôle de pression (13) pour l'application sur des supports d'impression (3) pendant un processus d'impression polychrome avec plusieurs champs de mesure (C, M, Y, B, X, U, V, Z, CMY), qui sont associés à une zone de couleur sur le support d'impression (3), les champs de mesure associés à une zone de couleur (9) comprenant au moins deux champs de mesure grise (CMY),
**caractérisée en ce que**
les champs de mesure (C, M, Y, B, X, U, V, Z, CMY) sont disposés dans au moins deux rangées parallèles entre elles et **en ce que** chaque champ de mesure de la première rangée est également au moins une fois présent dans chacune des autres rangées.

2. Bande de contrôle de pression (13) selon la revendication 1,
**caractérisée en ce que**
les champs de mesure associés à une zone de couleur comprennent trois champs de mesure de gris (CMY).

3. Bande de contrôle de pression (13) selon la revendication 2, **caractérisée en ce que**
les champs de mesure de gris (CMY) montrent un quart de ton,
un demi ton et un trois quart de ton se composant des trois couleurs de base Cyan (C), Magenta (M) et Jaune (Y).

4. Bande de contrôle de pression (13) selon l'une des revendications précédentes,
**caractérisée en ce que** la bande de contrôle de pression (13) présente un ou plusieurs champs de mesure avec des couleurs particulières (U, X, V, Z).

5. Bande de contrôle de pression (13) selon l'une des revendications précédentes,
**caractérisée en ce que**
les champs de mesure (C, M, Y, B, X, U, V, Z, CMY) sont disposés dans la rangée respectivement dans un ordre différent.

6. Bande de contrôle de pression selon l'une des revendications précédentes, **caractérisée en ce que** les champs de mesure (C, M, Y, B, X, U, V, Z, CMY) sont présents respectivement une seule fois dans les rangées.
